# EUROPÄISCHE PATENTSCHRIFT

(11) **EP 2 306 811 B1**
(45) Veröffentlichungstag und Bekanntmachung des Hinweises auf die Patenterteilung: **28.08.2013**
(21) Anmeldenummer: 09772231.8
(22) Anmeldetag: 07.05.2009
(51) Int. Cl.: A01K 27/00, A44C 5/10

(54) **HALSBAND FÜR TIERE, INSBESONDERE HUNDE**
COLLAR FOR ANIMALS, IN PARTICULAR DOGS
COLLIER POUR ANIMAUX, EN PARTICULIER POUR CHIENS

(30) Priorität: 03.07.2008 DE 102008031229
(43) Veröffentlichungstag der Anmeldung: 13.04.2011
(73) Patentinhaber: HERM. SPRENGER GmbH & Co. KG, D-58644 Iserlohn (DE)
(72) Erfinder: VÖLLMECKE, Valentin, 58640 Iserlohn (DE); SCHULTE, Dirk, 58638 Iserlohn (DE)
(74) Vertreter: Bauer Vorberg Kayser Patentanwälte
(86) Internationale Anmeldenummer: PCT/EP2009/055571
(87) Internationale Veröffentlichungsnummer: WO 2010/000531

(56) Entgegenhaltungen:
- DE-A1- 3 344 699
- US-A- 448 546
- US-A- 1 170 767
- US-A- 5 647 303
- US-A1- 2006 179 814
- US-B1- 6 606 967

## Beschreibung

Die Erfindung bezieht sich auf ein Halsband für Tiere, insbesondere Hunde, das Kettenglieder aufweist, nach dem Oberbegriff des Patentanspruchs 1. Ein derartiges Halsband ist aus der US2006/0179814 A1 bekannt.

Das Kettenglied kann, muss aber nicht mindestens einen Zahn aufweisen, der nach innen vorsteht.

Aus der DE 84 15 418 U1 ist ein Halsband für Tiere bekannt, bei dem die einzelnen Kettenglieder aus Rundmaterial gefertigt sind und zusätzlich umhüllt sind, z.B. mit Leder. Die freien Enden jedes Abschnitts des Rundmaterials, aus dem jeweils ein Kettenglied gebogen ist, bilden zwei Zähne aus. Die Verkleidung soll vermeiden, dass das Stachelhalsband als solches unmittelbar erkannt wird.

Ähnliche Kettenglieder verwendet auch das aus der DE 9 41 458 A vorbekannte Hundehalsband, das jedoch nur zwei aus Rundmaterial gebogene Kettenglieder aufweist, die jeweils zwei Zähne haben.

Bei Stachelhalsbändern ist man bestrebt, das Halsband möglichst einem normalen Halsband anzugleichen, damit es nicht unmittelbar als Stachelhalsband erkannt wird. Insoweit sind Stachelhalsbänder, deren Kettenglieder aus Rundmaterial gefertigt sind, ungünstig, weil sie sich deutlich von anderen Halsbändern unterscheiden. Derartige Halsbänder haben aber etliche Vorteile, sie können zwischen zwei Kettengliedern jederzeit einfach getrennt werden, sie lassen sich einfach herstellen, sie sind bestens gegen Abnutzung und Verschleiß gesichert und sind einfach sauber zu halten.

Ausgehend von den vorbekannten Halsbändern hat sich die Erfindung die Aufgabe gestellt, die vorbekannten Halsbänder so weiterzuentwickeln, dass sie optisch gut wirken, jedenfalls einem normalen Halsband stärker ähneln, als einem typischen, aus Draht hergestellten Halsband.

Diese Aufgabe wird gelöst durch ein Halsband für Tiere, insbesondere Hunde, mit den Merkmalen des Anspruchs 1.

Bei diesem Halsband sind die einzelnen Kettenglieder aus einem Blechzuschnitt gefertigt. Die Kettenglieder sind vorzugsweise aus Metall hergestellt. Nach außen sieht das Halsband aus wie eine Gliederkette, die aus nebeneinander liegenden, vollflächigen Blechplatten besteht. Als Stachelhalsband ist es praktisch nicht zu erkennen. Die Stacheln lassen sich im Innenbereich so verdeckt anordnen, dass sie auch bei Schrägsicht unter das Halsband nicht sofort erkannt werden können. Vorteilhaft ist auch, dass die Stacheln unabhängig von der Geometrie der Kettenglieder und ohne Rücksicht auf die Funktion der Kettenglieder ausgebildet werden können. Sie sind reine Zusätze, könnten also entfallen, ohne dass die Kette ihren Halt verliert. Dies ist bei den drahtgebogenen Stachelhalsbändern nach dem Stand der Technik, wie sie allgemein vorherrschend sind, so nicht der Fall.

Beibehalten wird bei der Erfindung die hohe Verschleißfestigkeit der reinen Metallketten. Ebenfalls günstig ist die Säuberung, die Kette lässt sich einfach reinigen. Optisch ist die erfindungsgemäße Halskette ansprechender und schöner als die Halsbänder nach dem Stand der Technik.

Vorzugsweise ist das Fenster so bemessen, dass der Hakenbereich durch das Fenster passt, und weist der Einhakbereich weiterhin ein Randstück auf, das sich zwischen dem Fenster und einem hinteren Ende des Kettengliedes befindet, und hat der Hakenbereich eine freie Öffnung, die so bemessen ist, dass das Randstück durch die freie Öffnung passt.

Im Gegensatz zu den aus Draht gefertigten Halsbändern werden die Kettenglieder beim Auseinandernehmen und Zusammensetzen nicht elastisch verformt, vielmehr erfordert Zusammenfügen und Auseinandernehmen einen komplizierten Weg ähnlich einer Schikane. Dadurch erfolgt eine formschlüssige Sicherung und nicht, wie bei den aus Draht gefertigten Halsbändern, eine elastische Sicherung. Dies bedeutet aber, dass Fehlbedienungen weitgehend ausgeschlossen sind, die einzelnen Kettenglieder aus relativ festem Material hergestellt werden können und es auch auf Dauer nicht zu einem Verändern der Form der einzelnen Kettenglieder kommt.

Zum Trennen und Auseinandernehmen zweier benachbarter Kettenglieder muss der Hakenbereich jeweils durch das Fenster geführt werden. Der Hakenbereich hat eine komplizierte Form, er verläuft jedenfalls nicht gradlinig, er ist gekrümmt, zumeist mehrfach gekrümmt, beispielsweise verläuft er S-förmig gekrümmt. Zu kann auch der mindestens eine Zahn gehören, der quer zum Kettenglied wegsteht. Dadurch ist eine komplizierte Bewegung notwendig, um die Kettenglieder zu trennen oder zusammenzufügen. Mit Sicht auf zwei benachbarte Kettenglieder ist diese Bewegung einfach, im normalen Bewegungsablauf kann sie jedoch praktisch nicht auftreten, zumal bei angelegter Kette eine gewisse Spannung in der Kette ist und dann ein selbsttätiges Trennen auszuschließen ist.

Vorzugsweise weist der Zahnbereich zwei Zähne auf, die parallel zueinander verlaufen und ähnlich den Zähnen einer Hündin ausgebildet sind. Die Erfindung ermöglicht es, die Form der Zähne beliebig auszuwählen. Sie können somit so geformt werden, dass sie optimal auf den Hund einwirken. Sie können so verrundet sein, dass praktisch keine Verletzungen auftreten können.

Als besonders bevorzugt hat es sich herausgestellt, dass der Einhakbereich ein Randstück aufweist, dass zwischen dem Fenster des Einhakbereichs und dem benachbarten Ende vorgesehen ist. Dieses Randstück ist in einem gewissen Winkel gegenüber einem hinteren Hauptbereich des Einhakbereichs abgewinkelt. Dadurch hat die Kette eine Rundung, die einzelnen Kettenglieder stehen in dem Winkel, um den das Randstück abgewinkelt ist, zueinander. Dadurch lässt sich die Kette auf einen gewissen Durchmesser, der dem Durchmesser des Hundehalses entspricht, anpassen und hat ihre beste Wirkung in diesem Fall.

Die Kettenglieder lassen sich sehr einfach jeweils aus einem Blechzuschnitt herstellen. Verwendet wird Blechmaterial mit typischerweise 1 bis 2 mm Wandstärke, vorzugsweise liegt die Wandstärke im Bereich von 1,5 mm plus/minus 10%. Dadurch ist ausreichend Raum vorhanden für die Relativbewegung der Kettenglieder. Die einzelnen Zuschnitte sind im Wesentlichen länglich, sie bilden an einem Ende den mindestens einen Zahn aus, am anderen Ende ist das Fenster. Sie werden entlang Biegelinien, die parallel zur Längsrichtung des Fensters verlaufen, mehrfach in ihre endgültige Form gebogen. Hierfür können Maschinen eingesetzt werden.

Vorzugsweise hat der Hakenbereich einen Innenraum des Hakens, dieser Innenraum bietet ausreichend Platz für das Randstück. Vorzugsweise sind die lichten Abmessungen des Innenraums größer als das 1,5 fache der (quer zur Längsrichtung des Fensters) gemessenen Breite des Fensters. Bei der einfach zu demontierenden und zu montierenden Ausbildung ist der Innenraum im Bereich der freien Öffnung des Hakenbereichs eng und weitet sich nach außen und nach innen hin auf. Dadurch bleibt ausreichend Raum für das Zusammenfügen. Die freie Öffnung kann so eng gewählt werden, dass das Randstück in schräger Ausrichtung gerade hindurchpasst. Dadurch ist eine hohe Sicherheit gegen selbsttätiges Lösen gegeben. Bei der nicht zu demontierenden und zu montierenden Ausbildung ist die freie Öffnung so klein, insbesondere null, dass ohne Verformung das Randstück nicht durch die freie Öffnung passt.

Als bevorzugt hat es sich herausgestellt, in dem Halsband ein Zwischenglied vorzusehen. Es hat keine Zähne. Es kann im Bereich des Kehlkopfes des Hundes positioniert sein. Dadurch wird dieser kritische Bereich geschützt. Das Zwischenglied hat den Vorteil, dass spiegelbildlich die Kettenglieder zu beiden Seiten angeordnet werden können, was die Herstellung des Halsbandes vereinfacht und insbesondere die Ausbildung der Endglieder vereinfacht. Diese können nun baugleich sein.

Weitere Vorteile und Merkmale der Erfindung ergeben sich aus den übrigen Ansprüchen sowie der nun folgenden Beschreibung von drei nicht einschränkend zu verstehenden Ausführungsbeispielen der Erfindung, die im Folgenden unter Bezugnahme auf die Zeichnung näher erläutert werden. In dieser Zeichnung zeigen:
- Fig. 1:: Eine Seitenansicht zweier ineinander gehakter Kettenglieder,
- Fig. 2:: eine Vordersicht des rechten Kettengliedes nach Figur 1 in Blickrichtung II,
- Fig. 3:: eine Draufsicht auf einen Blechzuschnitt für ein Kettenglied nach Figur 1,
- Fig. 4:: eine Draufsicht auf einen Blechzuschnitt für ein Zwischenglied,
- Fig. 5:: eine Draufsicht auf einen Blechzuschnitt für ein Endglied,
- Fig. 6:: eine seitliche Ansicht eines Halsbands mit Kettengliedern wie in Fig. 1,
- Fig. 7:: eine Draufsicht auf einen Blechzuschnitt für ein Kettenglied für eine zweite Ausführung,
- Fig. 8:: eine seitliche Ansicht eines Kettengliedes für die zweite Ausführung,
- Fig. 9:: eine Draufsicht auf eine Kette,
- Fig. 10:: eine Seitenansicht zweier ineinander gehakter Kettenglieder eines dritten Ausführungsbeispiels,
- Fig. 11:: eine Draufsicht auf einen Blechzuschnitt für ein Kettenglied nach dem dritten Ausführungsbeispiel,
- Fig. 12:: eine Draufsicht auf einen Blechzuschnitt für ein Endglied nach dem dritten Ausführungsbeispiel,
- Fig. 13:: eine Draufsicht auf einen Blechzuschnitt für ein Kettenglied nach einem vierten Ausführungsbeispiel, und
- Fig. 14: eine seitliche Ansicht eines Kettengliedes für die vierte Ausführung.

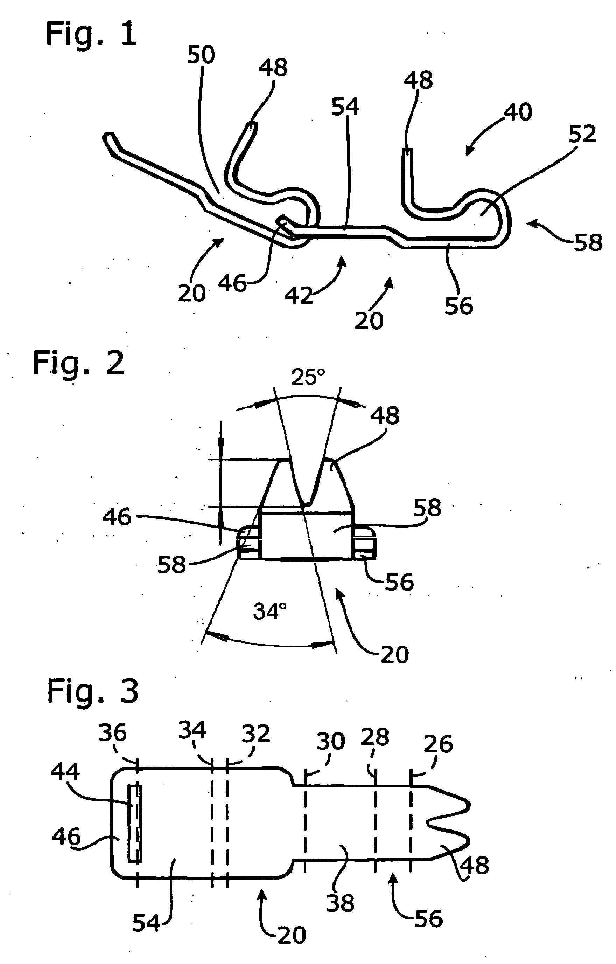

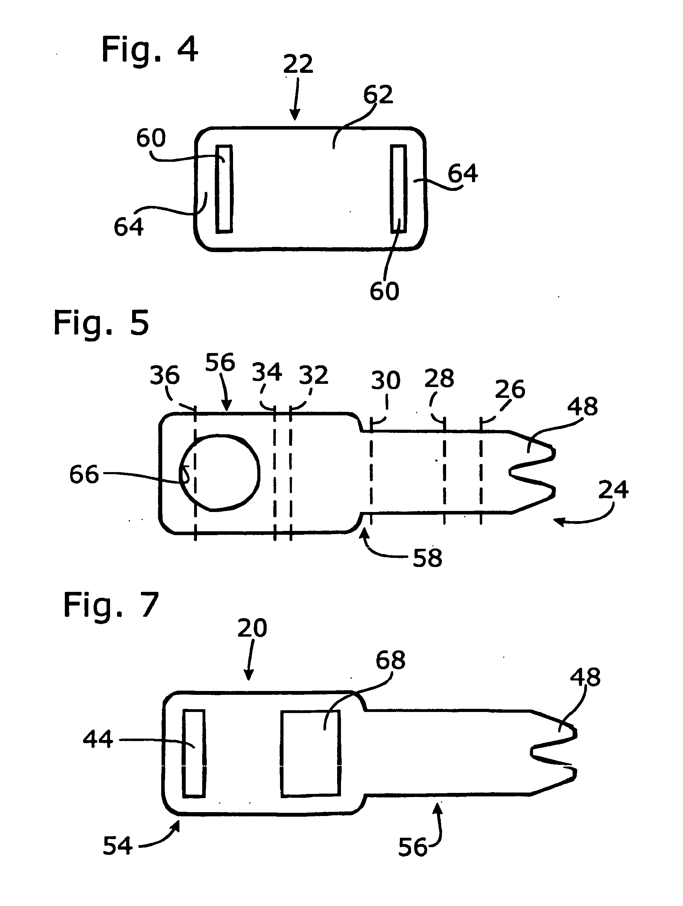

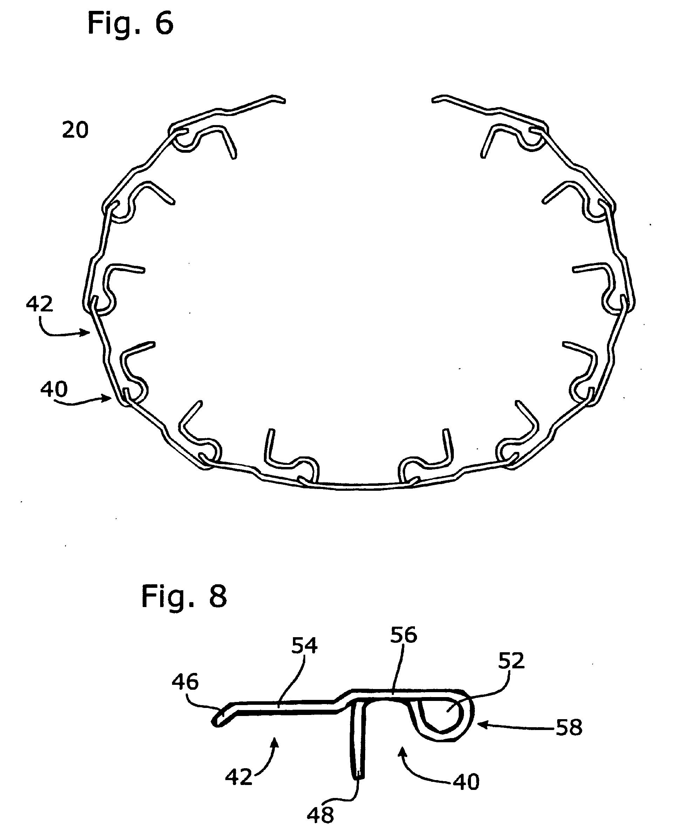

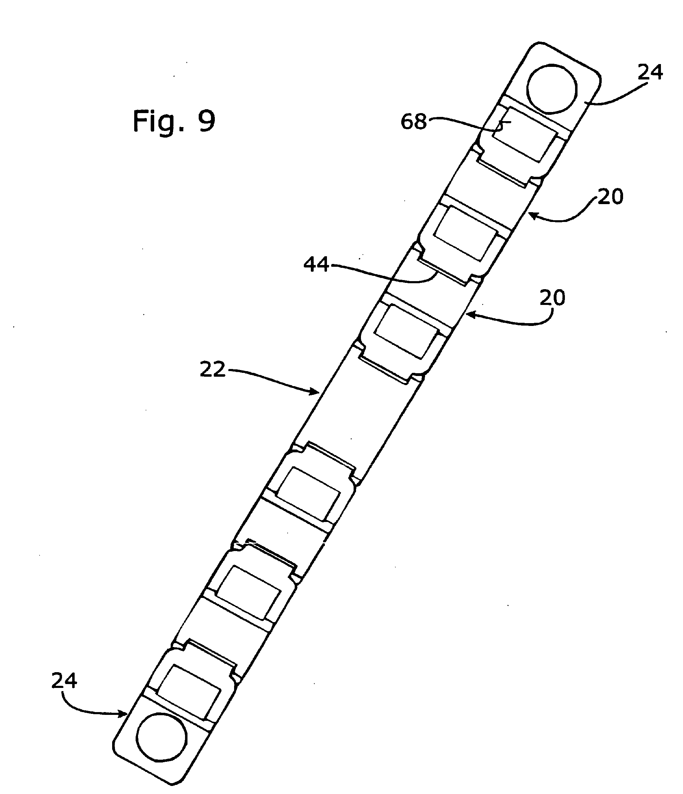

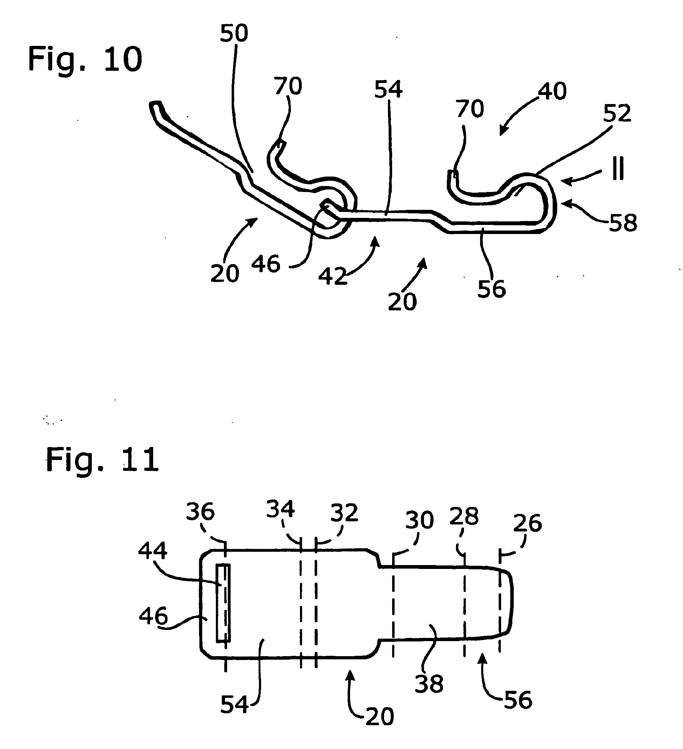

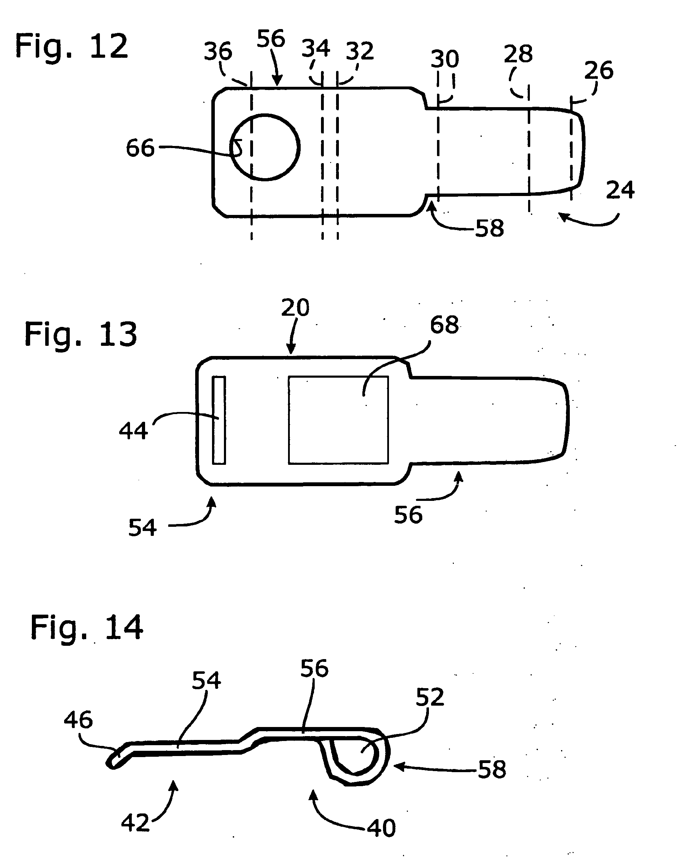

Die Figuren 1 bis 6 beziehen sich auf ein erstes Ausführungsbeispiel, bei diesem ist ein einfaches Trennen benachbarter Kettenglieder ohne apparative Hilfsmittel möglich. Die Figuren 7 und 8 beziehen sich auf ein zweites Ausführungsbeispiel, das so ausgelegt ist, dass ein Trennen benachbarter Kettenglieder ohne plastische Verformung nicht möglich ist. Die Figur 9 gilt für alle Ausführungen. Die Figuren 10 bis 12 beziehen sich auf ein drittes Ausführungsbeispiel, es sind keine Zähne vorgesehen. Die Figuren 13 und 14 beziehen sich auf ein viertes Ausführungsbeispiel, das ebenfalls keine Zähne aufweist. Die Ausführungsbeispiele zwei bis vier werden nur insoweit beschrieben, als sie sich von dem ersten unterscheidet.

Das Halsband nach dem ersten Ausführungsbeispiel hat normale Kettenglieder 20, ein Zwischenglied 22 und zwei Endglieder 24, die alle jeweils aus einem Blechzuschnitt hergestellt sind. Im Folgenden wird zunächst auf die normalen Kettenglieder 20 eingegangen. Diese sind aus einem Blechzuschnitt gefertigt, wie ihn Fig. 3 zeigt. Er ist aus einem Metall, vorzugsweise Edelstahl, hergestellt, beispielsweise durch Stanzen oder Schneiden, er hat typischerweise eine Materialstärke von etwa 1,5 mm. Das Material ist so gewählt, dass es per Hand praktisch nicht verbogen werden kann.

Ausgehend von dem Blechzuschnitt, wie in Figur 3 zeigt, werden mehrere Biegungen um insgesamt sechs Biegelinien 26 bis 36 durchgeführt, zudem wird ein zwischen der zweiten Biegelinie 28 und der dritten Biegelinie 30 liegender Bereich 38 gekrümmt.

Die Kettenglieder 20 weisen jeweils einen Hakenbereich 40 und einen Einhakbereich 42 auf. Die vierten und fünften Biegelinien 32, 34 bilden die Grenze zwischen diesen beiden Bereichen 40, 42. In Längsrichtung des Blechzuschnitts gemäß Figur 3 haben diese beiden Bereiche 40, 42 ein Verhältnis von etwa 2: 1. Sie unterscheiden sich zudem in der Abmessung in Querrichtung, also der Breite. Der Einhakbereich 42 hat eine konstante Breite, die etwa seiner Länge entspricht. Der Hakenbereich 40 hat zwei unterschiedliche Breitenabmessungen. Er hat über einen wesentlichen Teil seiner Gesamtlänge eine kleinere konstante Breite, die etwa 2/3 so groß ist wie die Breite des Einhakbereichs 42, er verbreitert sich zum Einhakbereich 42 hin stufenartig in Nähe der dritten Biegelinie 30 auf die Breite des Einhakbereichs 42. Der Zuschnitt gemäß Figur 3 ist spiegelsymmetrisch um eine Mittellinie, die parallel zur Längsachse verläuft. Diese Spiegelbildlichkeit gilt auch für alle anderen gezeigten Blechzuschnitte, also Figur 4, Figur 5 und Figur 7.

Im Einhakbereich 42 ist ein Fenster 44 vorgesehen, es verläuft quer zur Längsrichtung des Zuschnitts. Seine Abmessungen sind so gewählt, dass der Hakenbereich 40 durch das Fenster 44 hindurchpasst. Ob dies mit mehr oder weniger Spiel geschieht, ist eine Frage der Abstimmung. Das Übermaß des Fensters 44 gegenüber der Querschnittsabmessung des Hakenbereichs 40 kann 5 bis 100 % betragen.

Der Einhakbereich 42 hat weiterhin ein Randstück 46, das sich zwischen dem Fenster 44 und einem hinteren Ende des Kettengliedes 20 befindet. Am gegenüberliegenden Ende hat der Blechzuschnitt einen ersten Endbereich, dort weist er zwei Zähne 48 auf. Sie sind wie ein W angeordnet. Sie liegen in der gleichen Ebene. Wie Figur 2 zeigt, haben die Zähne 48 einen Scheitelwinkel von 34°, zwischen den beiden Zähnen 48 ist ein freier Winkelbereich von 25°. Die Zähne 48 haben eine freie Länge von 8 mm. Sie sind mit einer Rundung von etwa 1,2 mm abgerundet, vorzugsweise hat der Abrundungskreis einen Radius von 0,8 bis 2 mm. Wie insbesondere der Zuschnitt gemäß Figur 3 erkennen lässt, ist der Zahn 48 Teil des Hakenbereichs 40.

Bei der Herstellung des Kettengliedes 20 wird ausgehend von dem flachen Blechzuschnitt gemäß Figur 3 eine Anzahl von Biegungen vorgenommen, die in beliebiger Reihenfolge durchgeführt werden können. Sie werden im Folgenden in einer willkürlichen Reihenfolge beschrieben: Um die sechste Biegelinie 36 wird das Randstück 46 um einen Winkel von etwa 30 bis 40° abgewinkelt, die Abwinklung erfolgt dabei im mathematisch positiven Sinn. Die fünfte Biegelinie 34 und die vierte Biegelinie 32 liegen eng beisammen, der Abstand beträgt wenige Millimeter, hier wird eine Abkröpfung, also ein Parallelversatz durchgeführt. Dabei wird um die fünfte Biegelinie 34 im mathematisch negativen Sinn, um die vierte Biegelinie 32 im mathematisch positiven Sinn gebogen. Um die dritte Biegelinie 30 wird im mathematisch positiven Sinn eine Abwinklung von etwa 90° durchgeführt. Der Bereich 38, der sich zwischen der dritten Biegelinie 30 und der zweiten Biegelinie 28 befindet, wird nun im gleichen Sinn kontinuierlich verkrümmt und bildet dann einen gekrümmten, vorderen Bereich 58. Die zweite Biegelinie 28 hat eine Biegung um etwa 45° im mathematisch positiven Sinn. Ebenfalls im mathematisch positiven Sinn erfolgt eine 90°-Abwinklung im Bereich der ersten Biegelinie 26. Ebenso wird auch das Endglied 24 gebogen, vorzugsweise in der gleichen Vorrichtung.

Wie Figur 1 erkennen lässt, weist der Hakenbereich 40 eine freie Öffnung 50 aus, die Teil eines Innenraums 52 des Hakenbereichs 40 ist. Diese freie Öffnung 50 ist die Engstelle, von ihr ausgehend öffnet sich Innenraum 52 zu einem Bereich deutlich größerer Querschnittsabmessungen.

Um die beiden in Figur 1 gezeigten Kettenglieder 20 voneinander zu trennen, wird das rechte Kettenglied 20 gedreht, zunächst gegen den Uhrzeigersinn, das linke Kettenglied wird festgehalten. Durch weitere hin- und hergehende Bewegung wird der Hakenbereich 40 aus dem Fenster 44 herausgefädelt. Im letzten Schritt wird das Fenster 44 über die beiden Zähne 48 gezogen. Die Montage erfolgt entsprechend umgekehrt. Die Abmessungen des Randstücks 46 und der freien Öffnung 50 sind so getroffen, dass das Randstück 46 durch die freie Öffnung 50 passt.

Das Randstück 46 ist um die sechste Biegelinie 36 abgewinkelt, weil die Normalform des Halsbandes eine Kreisform sein soll, wie sie in Figur 6 gezeigt ist. Die Randstücke 46 sind zumindest etwa in dem Winkel abgeknickt, in dem in Normalstellung, wie Figur 6 zeigt, zwei Kettenglieder 20 zueinander stehen. Der Winkel ist sogar etwas größer gewählt, beispielsweise um 5 bis 20° größer als ein Tangentenwinkel.

Der Einhakbereich 42 hat einen hinteren Hauptbereich 54, der eben ist. Er wird begrenzt u.a. durch das Fenster 44, die beschriebene Abkröpfung und die Seitenränder des Zuschnitts. Der Hakenbereich 40 hat einen vorderen Hauptbereich 56, der sich zwischen der dritten Biegelinie 30 und der vierten Biegelinie 32 erstreckt. Er trägt die beschriebene, stufenartige Verjüngung. Die beiden Hauptbereiche 54, 56 sind um eine Materialdicke des verwendeten Blechmaterials gegeneinander parallel versetzt im Bereich der beschriebenen Abkröpfung. Die Zähne 48 stehen in einem Winkel von etwa 90° zu den Hauptbereichen 54, 56. Der Hakenbereich 40 weist den gekrümmten, vorderen Endbereich 58 auf, der sich zwischen der zweiten Biegelinie 28 und der dritten Biegelinie 30 befindet. Dort ist, wie beschrieben, das Material kontinuierlich gekrümmt.

Im Folgenden wird nun das Zwischenglied 22 beschrieben. Es hat zwei Zwischengliedfenster 60, die parallel zueinander verlaufen und baugleich sind mit dem Fenster 44 jedes normalen Kettengliedes 20. Zwischen diesen Zwischengliedfenstem 60 befindet sich ein Hauptteil 62. Er ist eben. Er kann in beliebiger Länge ausgeführt werden, die dargestellte Länge, also der Abstand der Zwischengliedfenster 60, ist nur ein Ausführungsbeispiel. Außerhalb des Zwischengliedfensters 60 befindet sich jeweils ein Zwischengliedrandstück 64, auch sie sind baugleich mit dem Randstück 46 des Kettengliedes 20. Ebenfalls sind sie um eine sechste Biegelinie 36 entsprechend der Darstellung in Figur 3 abgewinkelt, wobei die beiden Zwischengliedrandstücke 64 in unterschiedliche Drehrichtungen abgewinkelt sind, wie dies Figur 6 zeigt. Sonstige Abbiegungen sind nicht vorgenommen.

Im Folgenden wird nun ein Endglied 24 beschrieben. Sein Zuschnitt, wie in Figur 5 gezeigt, entspricht weitestgehend dem Zuschnitt des normalen Kettengliedes 20. Die äußere Form ist identisch. Baugleich ist auch alles ausgeführt und durchgeführt bis zur fünften Biegelinie 34. Jenseits dieser befindet sich im Endglied kein Fenster, sondern eine große Öffnung 66, sie dient der Aufnahme von Verbindungsschlaufen oder dergleichen, beispielsweise aus Kunststoff, Leder usw., und zur Verbindung mit einer (nicht dargestellten) Leine. Die große Öffnung 66 ist im gezeigten Ausführungsbeispiel kreisrund und hat einen Durchmesser, der etwa der Längsabmessung des Fensters 44 entspricht. Im Gegensatz zum normalen Kettenglied 20 kann die sechste Biegelinie 36 fehlen. Es ist jedoch aus Gründen der Fertigung vorteilhaft, sie auch vorzusehen, wie dargestellt. Betont werden soll, dass auch die Endglieder 24 jeweils Zähne 48 aufweisen.

Im Folgenden wird nun auf das zweite Ausführungsbeispiel eingegangen Es unterscheidet sich dadurch vom ersten Ausführungsbeispiel, dass die freie Öffnung 50 nun den Wert null hat, also anders ausgedrückt der Innenraum 52 des Hakenbereichs 40 allseitig geschlossen ist. Um die einzelnen Kettenglieder miteinander zusammenbringen zu können, sind spezielle Operationen notwendig. Es muss plastisch verformt werden. Wie Figur 7 zeigt, ist der Blechzuschnitt für das normale Kettenglied 20 nach der zweiten Ausführung etwas länger als der Blechzuschnitt nach Figur 3, ansonsten weitgehend übereinstimmend. Die größere Länge spielt sich im Wesentlichen in einem größeren Abstand zwischen der zweiten Biegelinie 28 und der dritten Biegelinie 30 nieder. Der Blechzuschnitt nach Figur 7 hat zusätzlich ein Sichtfenster 68, das im vorderen Hauptbereich 56 ausgebildet ist. Es hat eine Querabmessung, die den Abmessungen des Fensters 44 entspricht. Es ist allerdings in Längsrichtung etwa drei Mal so breit wie das Fenster 44. Wie Figur 8 zeigt, wird der Hakensteg so verkrümmt, dass er teilweise im Bereich des Sichtfensters 68 liegt und dieses ausfüllt. Dadurch hat das fertige Kettenglied 20 im Bereich des Sichtfensters 68 eine Dicke, die der einfachen Materialstärke entspricht.

Auf das Sichtfenster 68 kann verzichtet werden. Es genügt, den Hakensteg bis in Kontakt mit dem vorderen Hauptbereich 56 oder bis in seine Nähe zu bringen. Auch dann schon ist die freie Öffnung 50 so eng, dass ohne plastische Deformation eine Montage bzw. Demontage nicht möglich ist.

Die Zuschnitte für die Glieder 20, 22, 24 haben die gleiche Gesamtbreite und sind aus dem gleichen Blechmaterial.

Das dritte Ausführungsbeispiel entspricht im Wesentlichen dem ersten Ausführungsbeispiel, jedoch weist der Hakenbereich nun keine Zähne auf. Stattdessen liegt eine Umbiegung 70 vor. Man kann dies auch so beschreiben, dass das Material, das die Zähne 48 nach dem ersten Ausführungsbeispiel bildet, nur soweit reduziert ist, dass nur noch eine Umbiegung 70 vorliegt, die allenfalls 20%, insbesondere 10% so lang wie ein Zahn ist. Wie das vierte Ausführungsbeispiel zeigen wird, kann auf eine derartige Umbiegung 70 auch vollständig verzichtet werden. Es besteht die Möglichkeit, die Umbiegung 70 in eine andere Richtung abzuwinkeln, z.B. auch im Gegensinn abzuwinkeln, so dass sie in die freie Öffnung 50 ragt. Wie die Figuren 11 und 12 zeigen, sind die Zuschnitte nun im Vergleich mit den Figuren 3 und 5 deutlich kürzer.

Das vierte Ausführungsbeispiel entspricht dem zweiten Ausführungsbeispiel, jedoch wiederum ohne Zähne. Im Unterschied zum dritten Ausführungsbeispiel ist keine Umbiegung 70 vorgesehen. Dadurch enden die Zuschnitte für die einzelnen Glieder an der ersten Biegelinie 26. Die erste Biegelinie 26 entfällt. Die Zuschnitte werden dadurch noch kürzer.

Die Draufsicht auf die Kette nach Fig. 9 gilt für alle vier Ausführungsbeispiele. Diese Ansicht zeigt, dass von außen nicht erkennbar ist, ob Zähne 48 vorhanden sind oder nicht.

## Patentansprüche

1. Halsband für Tiere, insbesondere Hunde, das Kettenglieder (20, 22, 24) aufweist, die jeweils aus einem Blechzuschnitt und durch Biegen dieses Blechzuschnitts um Biegelinien (26-36) hergestellt sind, wobei die Kettenglieder (20, 24) jeweils einen Hakenbereich (40) und jeweils einen Einhakbereich (42) aufweisen, der Einhakbereich (42) ein Fenster (44) aufweist, das so bemessen ist, dass der Hakenbereich (40) durch das Fenster (44) passt, der Einhakbereich (42) weiterhin ein Randstück (46) aufweist, das sich zwischen dem Fenster (44) und einem hinteren Ende des Kettengliedes (20) befindet, der Blechzuschnitt einen ersten Endbereich und einen gegenüberliegenden, zweiten Endbereich aufweist, und dass der zweite Endbereich das Randstück (46) begrenzt, **dadurch gekennzeichnet, dass** mehrere Biegelinien (26-36) vorgesehen sind, die parallel zu einer Längsrichtung des Fensters (44) verlaufen.

2. Halsband nach Anspruch 1, dadurch gekennzelchnet, dass der Hakenbereich (40) eine frele Öffnung (50) aufweist, die so bemessen ist, dass das Randstück (46) durch die frele Öffnung (50) passt.

3. Halsband nach Anspruch 1, **dadurch gekennzeichnet, dass** der Hakenbereich (40) eine freie Öffnung (50) aufwelst, die so bemessen ist, dass das Randstück (46) ohne plastische Verformung des Kettengliedes (20) nicht durch die freie Öffnung (50) passt.

4. Halsband nach einem der vorangegangenen Ansprüche, **dadurch gekennzeichnet, dass** der Einhakbereich (42) auf der anderen, dem Randstück (46) gegenüberliegenden Seite des Fensters (44) einen hinteren Hauptbereich (54) aufweist, und dass das Randstück (46) in einem Winkel ≥ 5° und ≤30°, insbesondere ≥ 10° und ≤ 20°, gegenüber dem hinteren Hauptbereich (54) um eine Biegelinie (26) abgewinkelt ist, die parallel zu einer Längsrichtung des Fensters (44) verläuft.

5. Halsband nach einem der vorangegangenen Ansprüche, **dadurch gekennzeichnet, dass** der Hakenbereich (40) einen vorderen Hauptbereich (56), einen gekrümmten vorderen Endbereich und einen Hakensteg aufweist.

6. Halsband nach einem der vorangegangenen Ansprüche, **dadurch gekennzeichnet, dass** der Hakenbereich (40) einen vorderen Hauptbereich (56) aufweist, und dass dieser vordere Hauptbereich in einer Ebene liegt, die parallel ist zu einer Ebene, in der der hintere Hauptbereich liegt, vorzugsweise dass der hintere Hauptbereich um die Materialstärke des Blechzuschnitts gegenüber dem vorderen Hauptbereich (56) versetzt ist.

7. Halsband nach einem der vorangegangenen Ansprüche, **dadurch gekennzeichnet, dass** der Hakenbereich (40) einen Innenraum (52) des Hakens aufweist, dass dieser Innenraum (52) im Bereich der freien Öffnung eine Engstelle aufweist und sich, ausgehend von der freien Öffnung, zum vorderen Endbereich hin ausweitet.

8. Halsband nach einem der vorangegangenen Ansprüche, **dadurch gekennzeichnet, dass** der Hakenbereich (40) einen vorderen Hauptbereich (56) und einen Hakensteg aufweist, und dass sich die freie Öffnung (50) zwischen dem vorderen Hauptbereich (56) und dem Hakensteg befindet.

9. Halsband nach einem der vorangegangenen Ansprüche, **dadurch gekennzeichnet, dass** der Blechzuschnitt an seinem ersten Endbereich mindestens einen Zahn (48) ausbildet und dass der erste Endbereich so bemessen ist, dass er durch das Fenster (44) passt.

10. Halsband nach einem der vorangegangenen Ansprüche, **dadurch gekennzeichnet, dass** der Hakenbereich (40) einen vorderen Hauptbereich (56) und einen gekrümmten vorderen Endbereich aufweist und dass der vordere Endbereich in einem etwa rechten Winkel, jedenfalls in einem Winkel zwischen 80 und 100°, zum vorderen Hauptbereich (56) verläuft.

11. Halsband nach einem der vorangegangenen Ansprüche, **dadurch gekennzeichnet, dass** es ein Zwischenglied (22) aufweist, dass das Zwischenglied (22) an zwei gegenüber liegenden Endbereichen jeweils ein Zwischenglied-Fenster und jeweils außerhalb des Zwischenglied-Fensters ein Zwischenglied (22)-Randstück (46) aufweist.

12. Halsband nach Anspruch 11, **dadurch gekennzeichnet, dass** das Zwischenglied (22) weiterhin ein Hauptteil (62) aufweist, das sich zwischen den beiden Zwischenglied-Fenstern erstreckt, und dass jedes Zwischenglied-Randstück (64) in einem Winkel ≥ 5° und ≤ 30°, insbesondere ≥ 10° und ≤ 20°, gegenüber dem Hauptteil (62) abgewinkelt ist.

13. Halsband nach einem der vorangegangenen Ansprüche, **dadurch gekennzeichnet, dass** es weiterhin ein Endkettenglied aufweist, dass das Endkettenglied einen Hakenbereich (40) entsprechend einem normalen Kettenglied (20) aufweist, und dass das Endkettenglied eine große Öffnung (66) hat.

14. Halsband nach einem der vorangegangenen Ansprüche, **dadurch gekennzeichnet, dass** der Blechzuschnitt an einem ersten Endbereich mindestens einen Zahn (48) aufweist, und dass der mindestens eine Zahn (48) Teil des Hakenbereichs ist,

## Claims

1. Collar for animals, in particular dogs, comprising chain links (20, 22, 24) respectively produced from a sheet-metal blank and by bending this sheet-metal blank about bending lines (26-36), wherein the chain links (20, 24) each have a hook portion (40) and each a hook-in portion (42), the hook-in portion (42) comprises a window (44) dimensioned such that the hook portion (40) fits through the window (44), the hook-in portion (42) further has an edge portion (46) located between the window (44) and a rear end of the chain link (20), the sheet-metal blank comprises a first end portion and an opposite second end portion, and that the second end portion limits the edge portion (46), **characterised in that** several bending lines (26-36) are provided that extend parallel to a longitudinal direction of the window (44).

2. Collar according to claim 1, **characterised in that** the hook portion (40) comprises a free opening (50) dimensioned such that the edge portion (46) fits through the free opening (50).

3. Collar according to claim 1, **characterised in that** the hook portion (40) comprises a free opening (50) dimensioned such that the edge portion (46) does not fit through the free opening (50) without plastic deformation of the chain link (20).

4. Collar according to any one of the preceding claims, **characterised in that** the hook-in portion (42) comprises a rear main portion (54) on the other side of the window (44) opposite to the edge portion (46), and that the edge portion (46) is bent at an angle of ≥ 5° and ≤ 30°, in particular ≥ 10° and ≤ 20°, relative to the rear main portion (54) about a bending line (26) extending parallel to a longitudinal direction of the window (44).

5. Collar according to any one of the preceding claims, **characterised in that** the hook portion (40) comprises a front main portion (56), a curved front end portion and a hook web.

6. Collar according to any one of the preceding claims, **characterised in that** the hook portion (40) comprises a front main portion (56), and that this front main portion lies in a plane parallel to the plane in which the rear main portion lies, preferably, that the rear main portion is offset relative to the front main portion (56) by the material thickness of the sheet-metal blank.

7. Collar according to any one of the preceding claims, **characterised in that** the hook portion (40) comprises an inner space (52) of the hook, that this inner space (52), in the area of the free opening, comprises a narrow section and, starting from the free opening, widens towards the front end portion.

8. Collar according to any one of the preceding claims, **characterised in that** the hook portion (40) comprises a front main portion (56) and a hook web, and that the free opening (50) is located between the front main portion (56) and the hook web.

9. Collar according to any one of the preceding claims, **characterised in that** the sheet-metal blank forms at least one tooth (48) at its first end portion, and that this first end portion is dimensioned such that it fits through the window (44).

10. Collar according to any one of the preceding claims, **characterised in that** the hook portion (40) comprises a front main portion (56) and a curved front end portion, and that the front end portion extends in about a right angle, in any case in an angle of between 80 and 100°, relative to the front main portion (56).

11. Collar according to any one of the preceding claims, **characterised in that** it comprises an intermediate link (22), that the intermediate link (22) comprises, on two opposite end portions, an intermediate-link window, respectively, and, in each case, an intermediate-link (22) edge portion (46), respectively, outside of the intermediate-link window.

12. Collar according to claim 11, **characterised in that** the intermediate link (22) further comprises a main portion (62) extending between the two intermediate-link windows, and that each intermediate-link edge portion (64) is bent at an angle of ≥ 5° and ≤ 30°, in particular ≥ 10° and ≤ 20°, relative to the main portion (62).

13. Collar according to any one of the preceding claims, **characterised in that** it further comprises a final chain link, that the final chain link comprises a hook portion (40) corresponding to a normal chain link (20), and that the final chain link has a large opening (66).

14. Collar according to any one of the preceding claims, **characterised in that** the sheet-metal blank comprises at least one tooth (48) at a first end portion, and that the at least one tooth (48) is part of the hook portion.

## Revendications

1. Collier pour animaux, en particulier chiens, qui comprend des maillons (20, 22, 24) qui sont réalisés chacun à partir d'un flan en tôle et en pliant ce flan en tôle suivant des lignes de pliage (26-36), lesdits maillons (20, 24) présentant chacun une zone formant crochet (40) et chacun une zone d'accrochage (42), ladite zone d'accrochage (42) présentant une fenêtre (44) laquelle est dimensionnée de telle manière que ladite zone formant crochet (40) soit ajustée pour traverser ladite fenêtre (44), ladite zone d'accrochage (42) comprenant en outre une pièce marginale (46) qui est située entre ladite fenêtre (44) et une extrémité arrière du maillon (20), ledit flan en tôle présentant une première zone d'extrémité et une deuxième zone d'extrémité opposée, et que ladite deuxième zone d'extrémité délimitant ladite pièce marginale (46), **caractérisé par le fait que** plusieurs lignes de pliage (26-36) sont prévues qui s'étendent parallèlement à une direction longitudinale de ladite fenêtre (44).

2. Collier selon la revendication 1, **caractérisé par le fait que** ladite zone formant crochet (40) présente une ouverture libre (50) qui est dimensionnée de telle sorte que ladite pièce marginale (46) soit ajustée pour traverser ladite ouverture libre (50).

3. Collier selon la revendication 1, **caractérisé par le fait que** ladite zone formant crochet (40) présente une ouverture libre (50) qui est dimensionnée de telle sorte que ladite pièce marginale (46) ne puisse pas traverser ladite ouverture libre (50) sans déformer plastiquement ledit maillon (20).

4. Collier selon l'une quelconque des revendications précédentes, **caractérisé par le fait que** ladite zone d'accrochage (42) présente de l'autre côté de la fenêtre (44), opposé à ladite pièce marginale (46), une zone principale arrière (54) et que ladite pièce marginale (46) est coudée à un angle compris entre ≥ 5° et ≤ 30°, en particulier entre ≥ 10° et ≤ 20°, par rapport à ladite zone principale arrière (54) suivant une ligne de pliage (26) qui s'étend parallèlement à une direction longitudinale de ladite fenêtre (44).

5. Collier selon l'une quelconque des revendications précédentes, **caractérisé par le fait que** ladite zone formant crochet (40) présente une zone principale avant (56), une zone d'extrémité avant courbée et une entretoise de crochet.

6. Collier selon l'une quelconque des revendications précédentes, **caractérisé par le fait que** ladite zone formant crochet (40) présente une zone principale avant (56) et que cette zone principale avant est située dans un plan qui est parallèle à un plan où est située ladite zone principale arrière, de préférence que ladite zone principale arrière est décalée de l'épaisseur de matière du flan en tôle par rapport à ladite zone principale avant (56).

7. Collier selon l'une quelconque des revendications précédentes, **caractérisé par le fait que** ladite zone formant crochet (40) présente un espace intérieur (52) du crochet, que cet espace intérieur (52) présente un étranglement au niveau de ladite ouverture libre et s'évase à partir de ladite ouverture libre vers la zone d'extrémité avant.

8. Collier selon l'une quelconque des revendications précédentes, **caractérisé par le fait que** ladite zone formant crochet (40) présente une zone principale avant (56) et une entretoise de crochet et que ladite ouverture libre (50) est située entre la zone principale avant (56) et ladite entretoise de crochet.

9. Collier selon l'une quelconque des revendications précédentes, **caractérisé par le fait que** le flan en tôle forme au moins une dent (48) sur sa première zone d'extrémité et que ladite première zone d'extrémité est dimensionnée de telle sorte qu'elle soit ajustée pour traverser la fenêtre (44).

10. Collier selon l'une quelconque des revendications précédentes, **caractérisé par le fait que** ladite zone formant crochet (40) présente une zone principale avant (56) et une zone d'extrémité avant courbée et que ladite zone d'extrémité avant s'étend à un angle à peu près droit, en tout cas à un angle compris entre 80 et 100°, par rapport à ladite zone principale avant (56).

11. Collier selon l'une quelconque des revendications précédentes, **caractérisé par le fait qu'**il comprend un membre intermédiaire (22), que ledit membre intermédiaire (22) présente, sur deux zones d'extrémité opposées, respectivement une fenêtre de membre intermédiaire ainsi que, respectivement à l'extérieur de la fenêtre de membre intermédiaire, une pièce marginale (46) de membre intermédiaire (22).

12. Collier selon la revendication 11, **caractérisé par le fait que** ledit membre intermédiaire (22) comprend en outre une partie principale (62) qui s'étend entre les deux fenêtres de membre intermédiaire et que chaque pièce marginale (64) de membre intermédiaire est coudée à un angle compris entre ≥ 5° et ≤ 30°, en particulier entre ≥ 10° et ≤ 20°, par rapport à ladite partie principale (62).

13. Collier selon l'une quelconque des revendications précédentes, **caractérisé par le fait qu'**il comprend en outre un maillon terminal, que ledit maillon terminal comprend une zone formant crochet (40) conformément à un maillon normal (20) et que ledit maillon terminal présente une grande ouverture (66).

14. Collier selon l'une quelconque des revendications précédentes, **caractérisé par le fait que** ledit flan en tôle présente au moins une dent (48) sur une première zone d'extrémité et que ladite au moins une dent (48) fait partie de la zone formant crochet.
